# EUROPEAN PATENT SPECIFICATION

(11) **EP 2 460 719 B1**
(45) Date of publication and mention of the grant of the patent: **13.02.2013**
(21) Application number: 10400061.7
(22) Date of filing: 06.12.2010
(51) Int. Cl.: B64C 1/14

(54) **Aircraft door for emergency exit**
Flugzeugtür für Notausgang
Porte d'avion pour sortie d'urgence

(43) Date of publication of application: 06.06.2012
(73) Proprietor: Eurocopter Deutschland GmbH, 86609 Donauwörth (DE)
(72) Inventor: Vogel, Dominik, 86641 Rain am Lech (DE); Lees, Thilo, 86660 Tapfheim (DE); Bergmann, Thomas, 86609 Donauwörth (DE); Flachsel, Berthold, 86663 Asbach-Bäumenheim (DE); Jaeger, Dennis, 56567 Neuwied (DE)
(74) Representative: Pouillot, Laurent Pierre Paul

(56) References cited:
- GB-A- 1 551 821
- US-A- 3 802 125
- US-A- 5 031 863
- US-A1- 2003 057 326
- US-B1- 6 454 210

## Description

The present invention relates to an aircraft door as emergency exit and more particularly, relates to a modification of a helicopter cargo door to an emergency exit.

Known emergency exits on helicopters are relatively small not allowing the crew to pass with harnesses on. Cargo doors or loading platforms provided on helicopters are not suitable as emergency exit. The egress problem is also aggravated by the opening mechanism of cargo doors of the hinge type which is difficult to operate. The lack of emergency exits imposes a severe restriction on aircrafts as said lack is believed to be crucial during emergency egress following for example ditching.

Documents US-A 2004/0144894 A1 and US 6 454 210 B1 disclose an aircraft door having a locking assembly with first and second locking members each having a distal end arranged to move between engaged and disengaged positions with respect to a frame portion about the aircraft door, a central actuator, each of the locking members having a proximal end connected to the central actuator such that in a central actuator first position the central actuator will cause the distal ends of the locking members to be in the engaged position while in a central actuator second position, the central actuator will cause the distal ends to be in the disengaged position. An exterior handle is movable between an exterior handle closed position and an exterior handle open position, a first linkage extending from the exterior handle to the central actuator, the arrangement being such that when the exterior handle is moved from the exterior closed position to the exterior handle open position, the central actuator will move from the central actuator first position to the central actuator second position, an interior handle moveable between an interior handle closed position and an interior handle open position, and a second linkage extending from the interior handle to the central actuator, the arrangement being such that when the interior handle is moved from the interior handle closed position to the interior handle open position, the central actuator will move from the central actuator first position to the central actuator second position, the first and second linkages being independent of each other. According to said state of the art steep connecting rods in the door plane link the central actuator to each of the locking members said steep connecting rods being vulnerable in case of deformation of the door with the possible final consequence that the deformed door might be jammed due to said steep connecting rods being bent and becoming inoperative consequent to any deformation of the door.

It is an object of the present invention to provide a cargo door modification to improve an emergency exit from an aircraft, particularly from a helicopter, which can easily be installed on the particular aircraft and which renders the same safer.

According to the present invention, there is provided an aircraft door according to claim 1 having a locking assembly with at least first and second locking members each being arranged to move between engaged and disengaged positions with respect to flanges at a frame portion of the aircraft, a central actuator, each of the locking members being connected to the central actuator such that in a central actuator first position the central actuator will cause the locking members to be in the engaged position with said flanges while in a central actuator second position, the central actuator will cause the locking members to be in the disengaged position. Flexible transmission means, such as push-pull control cables and/or hydraulic and/or pneumatic transmission means and/or electric transmission means are provided for connection of the central actuator towards the at least first and second locking members for actuation of said at least first and second locking members resulting in advantageous installation space, flexible arrangement, independence from distortions of the door panel and savings with respect to weight, number of elements and hence possible sources for errors or failures when replacing the inventive aircraft door. The inventive aircraft door is of the hinge-type. Each of the at least first and second locking members may preferably comprise respectively fast release rod like members sliding into and out of a recess in a door frame portion or a hydraulic jack pivot connection. The central actuator in turn is connected to separate linkages which extend between an interior handle and an exterior handle respectively. Conveniently, the central actuator may comprise a pivotal member such that in a first position, the locking members are in an engaged position with the door frame portion while in a second position, the central actuator causes the locking members to be in a disengaged position with respect thereto.

In a preferred embodiment, at least one of the plurality of locking members, namely a third locking member is movable between engaged and disengaged positions relative to a hydraulic jack pivot connection.

In a further preferred embodiment, at least one of the locking members comprises at least one hydraulic piston and/or at least one linear induction motor.

In a further preferred embodiment the central actuator is provided with the interior handle and the exterior handle that are connected by a shaft as the pivotal member through said door for actuation of said locking members. The separate linkages are provided by two disks mounted coaxially to said shaft inside the aircraft door to actuate the flexible transmission means in response to any rotation of the shaft induced either by the interior handle on the inside or the exterior handle on the outside of said aircraft door via the central actuator. A torsional spring is mounted coaxially to said shaft between said inside handle and said outside handle to put the central actuator back in a starting position and to prevent unintended release of the aircraft door.

Having thus generally described the invention, reference will be made to the accompanying drawings illustrating a preferred embodiment of the invention, in which:
FIG. 1 is a top view of an aircraft door with a locking assembly according to the invention, and
FIG. 2 is a cross sectional view through the central actuator of the aircraft door according to the invention.

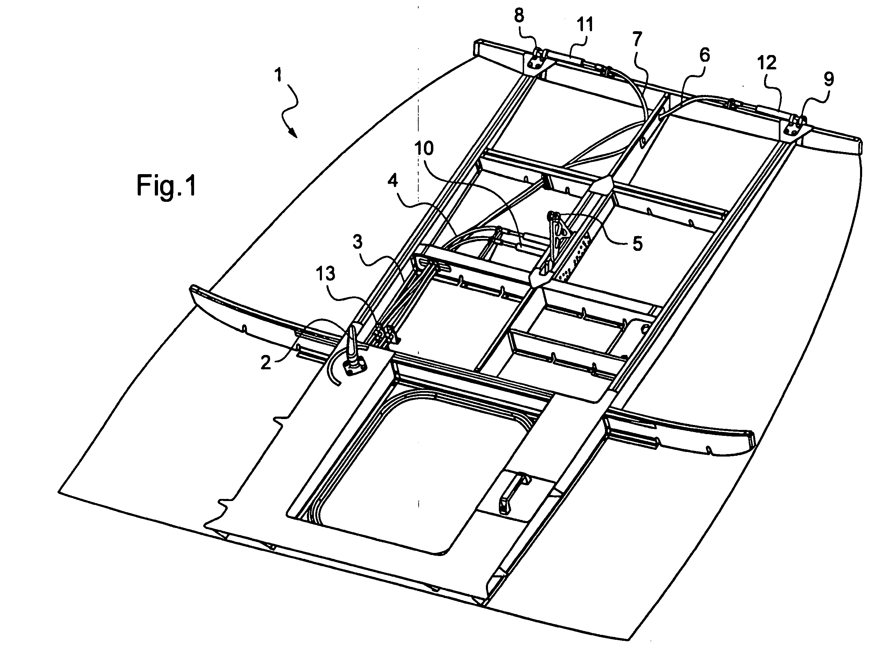

According to Fig. 1 there is an aircraft door 1, preferably a cargo door of a helicopter (not shown). A locking assembly of said aircraft door 1 comprises a central actuator 2, which is connected to push-pull control cables 3 as flexible transmission means. A first leg 4 of said flexible push-pull control cables 3 connects the central actuator 2 to a hydraulic jack pivot connection 5 linked between the aircraft door 1 and a fuselage of the helicopter. Second and third legs 6, 7 of said flexible push-pull control cable 3 connect the central actuator 2 to respective second and third hinge joints 8, 9 for mounting of said aircraft door 1 to a frame portion about the aircraft door 1 in the fuselage of the helicopter.

Locking members 10, 11, 12, e. g. fast release rods, are provided to engage or disengage respectively the hydraulic jack pivot connection 5 and the second and third hinge joints 8, 9. Each of said first, second and third legs 4, 6, 7 of said flexible push-pull control cables are connected on one side to one of said fast release rods 10, 11, 12 and on the other side to the central actuator 2.

Alternatively the central actuator 2 is connected via pressure lines 4, 6, 7 as flexible transmission means to pressure pistons 10, 11, 12 as locking members adapted to engage or disengage respectively the hydraulic jack pivot connection 5 and the respective second and third hinge joints 8, 9. The flexible pressure lines 4, 6, 7 may be pneumatic and/or hydraulic, with the pressure being provided from the helicopter or separate pressure units. A fast release clutch 13 is provided to connect the pressure lines 4, 6, 7 to the aircraft.

As a further alternative embodiment of the aircraft door 1 the central actuator 2 is connected via electric cables 4, 6, 7 as flexible transmission means to linear induction motors 10, 11, 12 as locking members adapted to engage or disengage respectively the hydraulic jack pivot connection 5 and the respective second and third hinge joints 8, 9 in response to any triggering of the central actuator 2. A fast release clutch 13 is provided to connect the flexible electric cables 4, 6, 7 to the aircraft.

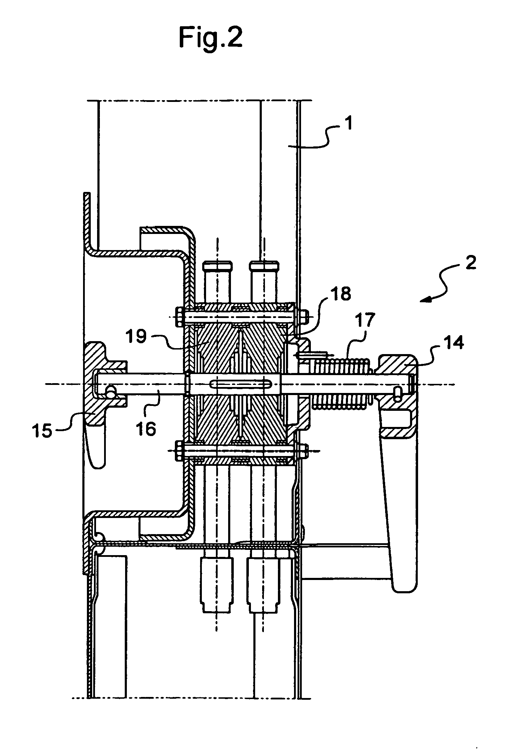

According to Fig. 2 corresponding features are referred to with the same references as in Fig. 1. The central actuator 2 comprises the interior handle 14 on the inside of said aircraft door 1 and the exterior handle 15 on the outside of said aircraft door 1. The interior handle 14 and the exterior handle 15 are connected by a shaft 16 through said door 1. Two disks 18, 19 are mounted coaxially to said shaft 16 inside the aircraft door 1 to actuate the flexible transmission means in response to any rotation of the shaft 16 with the central actuator 2 induced either by turning the interior handle 14 on the inside or the exterior handle 15 on the outside of said aircraft door 1. A torsional spring 17 is mounted coaxially to said shaft 16 between said interior handle 14 and said aircraft door 1 to put the central actuator 2 back in a starting position and to prevent unintended opening of the aircraft door 1.

## Claims

1. An aircraft door (1) for emergency exit having a locking assembly, wherein said locking assembly comprises: a plurality of locking members (10, 11, 12) movable between engaged and disengaged positions with respect to a corresponding plurality of flanges of a frame of said aircraft; a central actuator (2), each of said locking members (10, 11, 12) being connected to said central actuator (2) such that in a central actuator (2) first position said central actuator (2) will cause said locking members (10, 11, 12) to be in said engaged position while in a central actuator (2) second position, said central actuator (2) will cause said locking members (10, 11, 12) to be in said disengaged position, said central actuator (2) being accessible from either side of said door (1),
and flexible transmission means, such as push-pull control cables and/or hydraulic and/or pneumatic transmission means and/or electric transmission means (4, 6, 7) from the central actuator (2) towards the locking members (10, 11, 12) for actuating said locking members (10, 11, 12), **characterized in that** a hydraulic jack pivot connection (5) is provided and **in that** the central actuator (2) is connected via said flexible transmission means to said hydraulic jack pivot connection (5).

2. The aircraft door (1) according to claim 1,
**characterized in that** at least one of the plurality of locking members (10, 11, 12) is movable between engaged and disengaged positions relative to a hydraulic jack pivot connection (5).

3. The aircraft door (1) according to claim 1,
**characterized in that** at least one of said locking members (10, 11, 12) comprise at least one pressure piston and/or at least one linear induction motor.

4. The aircraft door (1) according to claim 1, **characterized in that** the central actuator (2) is provided with an interior handle (14) and an exterior handle (15) that are connected by a shaft (16) through said door (1), two disks (18, 19) being mounted coaxially to said shaft (16) to actuate the flexible transmission means (4, 6, 7) in response to any rotation of the shaft (16) and a torsional spring (17) being mounted coaxially to said shaft (16) between said interior handle (14) and said door (1).

## Patentansprüche

1. Eine Flugzeugtür (1) für den Notausstieg, die eine Verriegelungsbaugruppe besitzt, welche aus folgendem besteht: verschiedene Verriegelungselemente (10, 11, 12), die zwischen der verriegelten und entriegelten Stellung hin und her bewegt werden können, nämlich in Bezug auf entsprechende Flansche eines Rahmens dieses Flugzeugs; ein zentrales Bedienteil (2), das von beiden Seiten der Tür (1) zugänglich ist, wobei alle Verriegelungselemente (10, 11, 12) mit diesem mittleren Bedienteil (2) verbunden sind und zwar so, dass die Verriegelungselemente (10, 11, 12) in der eingerasteten Stellung sind, wenn das mittlere Bedienteil (2) in der ersten Stellung ist, und die Verriegelungselemente (10, 11, 12) in der nicht eingerasteten Stellung sind, wenn das mittlere Bedienelement in der zweiten Stellung ist;
und flexible Übertragungsmittel, wie Druck-Zug-Betätigungskabel, und/oder hydraulische und/oder pneumatische Übertragungsmittel und/oder elektrische Übertragungsmittel (4, 6, 7) zwischen mittlerem Bedienteil (2) und Verriegelungselementen (10, 11, 12), zur Betätigung dieser Verriegelungselemente (10, 11, 12), wobei ein Schwenkkopf mit Hydraulikzylinder (5) vorhanden ist und das mittlere Bedienteil (2) über die flexiblen Übertragungsmittel mit diesem Schwenkkopf mit Hydraulikzylinder (5) verbunden ist.

2. Die Flugzeugtür (1) gemäß Forderung 1,
die sich dadurch auszeichnet, dass mindestens eine der verschiedenen Verriegelungselemente (10, 11, 12) zwischen der eingerasteten und nicht eingerasteten Stellung hin und her bewegt werden kann, abhängig von einem Schwenkkopf mit Hydraulikzylinder (5).

3. Die Flugzeugtür (1) gemäß Forderung 1,
die sich dadurch auszeichnet, dass mindestens eine der verschiedenen Verriegelungselemente (10, 11, 12) mindestens einen Druckkolben und/oder mindestens einen linearen Induktionsmotor besitzt.

4. Die Flugzeugtür (1) gemäß Forderung 1,
die sich dadurch auszeichnet, dass das mittlere Bedienteil (2) einen Innengriff (14) und einen Außengriff (15) besitzt, die durch einen Schaft (16), der durch diese Türe (1) verläuft, miteinander verbunden sind; zwei Scheiben (18, 19) sind koaxial an den Schaft (16) montiert, um die flexiblen Übertragungsmittel (4, 6, 7) zu betätigen, als Reaktion auf jegliche Rotation des Schafts (16) und eine Verdrehungsfeder (17), die koaxial an den Schaft (16) montiert ist, zwischen innengriff (14) und Tür (1).

## Revendications

1. Porte d'aéronef (1) pour sortie de secours possédant un ensemble de verrouillage, ledit ensemble de verrouillage comprenant: une pluralité d'éléments de verrouillage (10, 11, 12) déplaçables entre une position engagée et une position désengagée par rapport à une pluralité correspondante de rebords de la structure dudit aéronef; un actionneur central (2), chacun desdits éléments de verrouillage (10, 11, 12) étant raccordés audit actionneur central (2) de telle façon qu'à une première position de l'actionneur central (2), ledit actionneur central (2) fasse en sorte que lesdits éléments de verrouillage (10, 11, 12) soient à ladite position engagée, tandis qu'à une deuxième position de l'actionneur central (2), ledit actionneur central (2) fasse en sorte que lesdits éléments de verrouillage (10, 11, 12) soient à ladite position désengagée, ledit actionneur central (2) étant accessible de chaque côté de ladite porte (1),
et un moyen de transmission flexible, tel qu'un ensemble de câbles de commande à va-et-vient et/ou un moyen de transmission hydraulique et/ou pneumatique et/ou un moyen de transmission électrique (4, 6, 7) allant de l'actionneur central (2) aux éléments de verrouillage (10, 11, 12), servant à actionner lesdits éléments de verrouillage (10, 11, 12), **caractérisée en ce qu'**un raccordement pivotant à vérin hydraulique (5) est présent et **en ce que** l'actionneur central (2) est raccordé par l'intermédiaire dudit moyen de transmission flexible audit raccordement pivotant à vérin hydraulique (5).

2. Porte d'aéronef (1) selon la revendication 1,
**caractérisée en ce qu'**au moins un des éléments de la pluralité d'éléments de verrouillage (10, 11, 12) est déplaçable entre une position engagée et une position désengagée par rapport au raccordement pivotant à vérin hydraulique (5).

3. Porte d'aéronef (1) selon la revendication 1,
**caractérisée en ce qu'**au moins un des éléments de verrouillage (10, 11, 12) comprend au moins un piston de pression et/ou au moins un moteur d'induction linéaire.

4. Porte d'aéronef (1) selon la revendication 1,
**caractérisée en ce que** l'actionneur central (2) est doté d'une poignée intérieure (14) et d'une poignée extérieure (15) qui sont raccordées par un arbre (16) traversant ladite porte (1), deux disques (18,19) étant montés coaxialement audit arbre (16) pour actionner le moyen de transmission flexible (4, 6, 7) en réponse à toute rotation de l'arbre (16) et un ressort de torsion (17) étant monté coaxialement audit arbre (16) entre ladite poignée intérieure (14) et ladite porte (1).
